# EUROPEAN PATENT SPECIFICATION

(11) **EP 2 747 580 B1**
(45) Date of publication and mention of the grant of the patent: **17.06.2015**
(21) Application number: 12750371.2
(22) Date of filing: 21.08.2012
(51) Int. Cl.: A23L 1/212, A23F 3/34, A23F 3/40, A23L 1/00, A23L 1/222, A23L 2/395

(54) **PROCESS FOR THE MANUFACTURE OF AN INFUSIBLE BEVERAGE INGREDIENT**
VERFAHREN ZUR HERSTELLUNG EINER UNAUFLÖSBAREN GETRÄNKEZUTAT
PROCÉDÉ DE FABRICATION D'UN INGRÉDIENT DE BOISSONS INFUSABLES

(30) Priority: 26.08.2011 EP 11178980
(43) Date of publication of application: 02.07.2014
(73) Proprietor: Unilever PLC, London EC4Y 0DY (GB); Unilever N.V., 3013 AL Rotterdam (NL)
(72) Inventor: BEINDORFF, Christiaan, Michaël, 3133 AT Vlaardingen (NL); COLLETT, Jonathan, George, Cambridge, Cambridgeshire, CB1 8RG (GB); JUBLOT, Lionel, 1072 Forel (CH); KHALLOUFI, Seddik, 3133 AT Vlaardingen (NL)
(74) Representative: Askew, Sarah Elizabeth
(86) International application number: PCT/EP2012/066282
(87) International publication number: WO 2013/030049

(56) References cited:
- EP-A1- 1 787 522
- CH-A- 533 954
- DE-A1- 3 738 042
- US-A- 2 748 003
- US-A- 5 147 669
- US-A1- 2007 048 429
- US-A1- 2008 199 592
- US-A1- 2009 252 838

## Description

### TECHNICAL FIELD

The present invention relates to an infusible beverage ingredient. More particularly, the present invention is directed towards the manufacture of an infusible beverage ingredient comprising dried fruit pieces that do not suffer from aggregation during handling or storage.

### BACKGROUND

There are many different varieties of infusible beverage products. For example, fruit infusions are becoming increasingly popular world-wide. Fruit infusions are typically based on standard infusible beverage products (e.g. leaf tea) but with added fruit flavourings and aromas. Indeed, fruit infusions containing real fruit pieces are especially enjoyed by consumers. This is thought to be due to the healthy connotations of the fruit, the appealing visual cues that are provided by the fruit pieces and the appealing taste and aroma of the final beverage. However, such infusible beverage products can be challenging to manufacture due to the inherent sticky nature of the fruit pieces.

Stickiness is a phenomenon that reflects the tendency of some materials to agglomerate and/or adhere to contact surfaces. Dried fruit pieces have a tendency to stick together, which can make them difficult to handle. The handling properties of dried fruit pieces can pose a significant technical challenge for manufacturing processes that involve combining dried fruit pieces with other ingredients (e.g. the manufacture of infusible beverage products containing infusible material such as tea together with real fruit pieces). In such processes, the dried fruit pieces may aggregate into solid masses which can impede the operation of the production line. Furthermore, as the fruit pieces move though the production lines they cause the rest of the apparatus to become sticky, which can also cause production to slow and even stop in order to clean the machinery. In some instances aggregation can even lead to machine breakdown.

Stickiness has been recognised as a problem in the food industry for many years, particularly with respect to sugar-rich products and/or hygroscopic materials which can easily regain moisture from humid air. For example, US 2010/0104699 (General Mills, Inc.) discloses the use of a particulate coating of microcrystalline cellulose to reduce the stickiness of raisins. However, consumers increasingly perceive food additives such as microcrystalline cellulose as being undesirable.

Thus we have recognised that there is a need to provide dried fruit pieces that do not suffer from the problem of aggregation and which do not require the addition of unwanted and/or undesirable ingredients. We have surprisingly found that particles of fruit peel can be used to reduce the stickiness of dried fruit pieces. The use of fruit peel particles is beneficial from the standpoint of sustainability, since fruit peel is often considered to be a waste product.

### SUMMARY OF THE INVENTION

We have now found that coating fruit pieces with fruit peel particles of a specific size can provide fruit pieces that do not suffer from aggregation. Such fruit peel particles are entirely natural ingredients that are acceptable to the consumer.

In a first aspect, the present invention provides a process for the manufacture of an infusible beverage ingredient comprising dried fruit pieces, the process comprising the steps of:
(a) providing fruit pieces and coating particles;
(b) mixing the fruit pieces and the coating particles to provide coated fruit pieces; and then
(c) drying the coated fruit pieces to a moisture content of less than 30 wt %, preferably to a moisture content of 0.1 to 10 wt %,
wherein the coating particles comprise particles of fruit peel which are less than 1.5 mm in diameter.

We have found that the handling properties of dried fruit pieces can be improved by coating fruit pieces with coating particles comprising particles of fruit peel prior to drying. In particular, we have found that coating particles comprising particles of fruit peel are particularly suitable for reducing the tendency of the dried fruit pieces to aggregate, even when the fruit pieces are exposed to relatively humid environmental conditions during handling and/or storage.

In second aspect, the present invention provides an infusible beverage ingredient comprising dried fruit pieces, wherein the fruit pieces comprise a coating, the coating comprising particles of fruit peel which are less than 1.5 mm in diameter. In a third aspect, an infusible beverage product is provided comprising the infusible beverage ingredient of the second aspect of the invention.

In a further aspect, the present invention provides use of coating particles to prevent the aggregation of dried fruit pieces, wherein the coating particles comprise particles of fruit peel which are less than 1.5 mm in diameter. Preferably the coating particles comprise particles of citrus fruit peel, more preferably particles of lemon peel.

### DETAILED DESCRIPTION

### TESTS AND DEFINITIONS

As used herein the term "comprising" encompasses the terms "consisting essentially of" and "consisting of". All percentages and ratios contained herein are calculated by weight unless otherwise indicated. It should be noted that in specifying any range of values or amount, any particular upper value or amount can be associated with any particular lower value or amount. The disclosure of the invention as found herein is to be considered to cover all embodiments as found in the claims as being multiply dependent upon each other irrespective of the fact that claims may be found with multiple dependency or redundancy. Unless defined otherwise, all technical and scientific terms used herein have the same meaning as commonly understood by one of ordinary skill in the art (e.g. in infusible beverage manufacture).

### Fruit Pieces

The fruit pieces may be pieces of any food-grade fruit. For example, the fruit pieces may be selected from the group consisting of acerola, apple, apricot, bilberry, blackberry, blackcurrant, blueberry, cherry, citron, clementine, cloudberry, cranberry, date, dragonberry, elderberry, fig, gooseberry, grape, grapefruit, greengage, guava, kiwi fruit, kumquat, lemon, lime, loganberry, lychee, mandarin, mango, medlar, melon, mulberry, nectarine, orange, papaya, passion fruit, paw paw, peach, pear, physalis, pineapple, plum, pomegranate, quince, redcurrant, raspberry, rhubarb, strawberry, tangerine, watermelon, or mixtures thereof. In a preferred embodiment the fruit pieces are preferably pieces of those fruit types which at maturity have a substantial amount of fleshy tissue. Fruit pieces selected from the group consisting of apricot, blackberry, peach, pineapple, raspberry, strawberry, and mixtures thereof are particularly preferred.

As used herein the term "dried fruit pieces" refers to fruit pieces having a reduced moisture content as compared to the fresh agricultural product Typically a dried fruit piece will have a moisture content of less than 30 wt %, preferably less than 20 wt % and most preferably 0.1 to 10 wt %. The dried fruit pieces are substantially insoluble in water (i.e. the dried fruit pieces will not dissolve when steeped or soaked in an aqueous liquid). However, the dried fruit pieces may nevertheless release certain water-soluble substances when steeped or soaked in an aqueous liquid, e.g. flavour and/or aroma molecules.

### Fruit Peel Particles

As used herein, the terms "fruit peel particles" and "particles of fruit peel" are used interchangeably, and may be particles of any food-grade fruit peel. As used herein the term "peel" encompasses the terms "rind" and "skin" and refers to the outer protective layer of a fruit, in particular the part of the fruit known in botanical terms as the exocarp.

The fruit peel particles are substantially insoluble in water (i.e. the fruit peel particles will not dissolve when steeped or soaked in an aqueous liquid). However, the fruit peel particles may nevertheless release certain water-soluble substances when steeped or soaked in an aqueous liquid, e.g. flavour and/or aroma molecules.

### Citrus Peel

As used herein the term "citrus fruit" refers to a fruit from a plant belonging to the genus *Citrus.* Similarly, the term "citrus peel" refers to the peel from one or more citrus fruits and encompasses the flavedo (or zest), the albedo (or pith), or a mixture thereof.

### Diameter

The fruit peel particles and fruit pieces may have heterogeneous shapes, sizes, volumes, surface areas and so on. For example, particles may be circular, non-circular or a mixture thereof. In some preferred embodiments, the particles are substantially flat. As used herein, the term "diameter" refers to the maximum length of the fruit peel particles in any dimension. For particles having an irregular shape, the diameter is the length of the longest cross-section that can be cut through the body of the particle. Similarly, for fruit pieces having an irregular shape, the diameter is the length of the longest cross-section that can be cut through the body of the fruit piece. When the diameter of coating particles, the diameter of fruit peel particles or the diameter of fruit pieces is referred to, it is meant that at least 90% by number of the particles or pieces have that diameter, and more preferably from 90 to 100% by number.

### Infusible beverage product

As used herein the term "infusible beverage product" refers to a fabricated composition suitable for preparing a beverage. An infusible beverage product will typically contain one or more infusible beverage ingredient(s). Aside from infusible beverage ingredients, the infusible beverage product may additionally comprise other food-grade ingredients such as sugars, salts, sweeteners, flavourings, colourants and/or aromas.

It is preferred that the mass of the infusible beverage product is at least 0.5 g as smaller amounts are difficult to accurately portion and dose. More preferably the mass of the infusible beverage products is at least 0.7 g, most preferably at least 0.9 g. Preferably the mass of the beverage precursor is less than 6 g as larger amounts become inconvenient to store and/or handle. More preferably the mass of the beverage is less than 5 g.

The infusible beverage product may be contacted with an aqueous liquid such as water to provide a beverage. This process is referred to as brewing. Brewing may be carried out at any temperature but is preferably carried out at least 40°C, more preferably at least 55°C, more preferably still at least 70°C and preferably less than 120°C, more preferably less than 100°C, more preferably still less than 90°C, most preferably less than 80°C.

### Infusible beverage ingredient

As used herein the term "infusible beverage ingredient" refers to a food-grade substance that when steeped or soaked in an aqueous liquid releases certain soluble substances into the liquid, e.g. flavour and/or aroma molecules. It is preferred that the infusible beverage ingredient is substantially insoluble in water (i.e. the infusible beverage ingredient will not dissolve when steeped or soaked in an aqueous liquid). Preferably, an infusible beverage ingredient will have a moisture content of less than 30 wt %, preferably less than 20 wt % and most preferably 0.1 to 10 wt %.

The coated dried fruit pieces of the present invention are an example of an infusible beverage ingredient. Other preferred examples of infusible beverage ingredients are tea plant material and/or herb plant material, with tea plant material being especially preferred.

In other embodiments wherein the infusible beverage ingredient is herb plant material, the herb is preferably selected from the group consisting of angelica (*angelica archangelica*), anise (*pimpinella anisum*), bergamot (*monarda didyma*), borage (*borago officinalis*), calendula (*calendula officinalis*), camphor laurel (*cinnamomum camphora*), chervil (*anthriscus cerefolium*), chicory (*dchorium intybus*), cilantro (*coriandrum sativum*), cumin (*cuminum cyminum*), dill (*anethum graveolens*), elderflower (*sambucus* spp.), fennel (*foeniculum vulgare*), fenugreek (*trigonella foenum-graecum*), ginger (*zingiber oficinale*), hibiscus (*hibiscus* spp.), hops (*humulus lupulus*), hyssop (*hyssopus officinalis*), jasmine (*jasminum* spp.), lavender (*lavandula* spp.), lemongrass (*cymbopogon citratus*), liquorice (*glycyrrhiza glabra*), lovage (*levisticum officinale*), marjoram (*origanum majorana*), mint (*mentha* spp.), nasturtium (*tropaeolum majus*), peppermint (*mentha piperata*), rooibos (*aspalathus linearis*)*,* rosehip (*rosa* spp.), rosemary (*rosmarinus officinalis*), sorrel (*rumex acetosa*), spearmint (*mentha spicata*), thyme (*thymus vulgaris*), tumeric (*curcuma longa*), or a mixture thereof. In a further embodiment, the infusible ingredients may also be a mixture of plant material from tea and one or more of the abovementioned herbs.

The infusible ingredient may also be any other suitable ingredient known to the person skilled in the art.

### Beverage

As used herein the term "beverage" refers to a substantially aqueous drinkable composition suitable for human consumption. Preferably the beverage comprises at least 85% water by weight of the beverage, more preferably at least 90% and most preferably from 95 to 99.9%.

### Tea

For the purpose of the present invention "tea plant material" refers to material from the leaves and/or stem of the plant *Camellia sinensis* var. *sinensis* and/or *Camellia sinensis* var. *assamica.* The term term "tea solids" refers to dry material extractable from the leaves and/or stem of the plant *Camellia sinensis* var. *sinensis* and/or *Camellia sinensis* var. *assamica.* The leaves and/or stem may have been subjected to a so-called "fermentation" step wherein they are oxidised by certain endogenous enzymes that are released during the early stages of "black tea" manufacture. This oxidation may even be supplemented by the action of exogenous enzymes such as oxidases, laccases and peroxidises. Alternatively the leaves may have been partially fermented ("oolong tea") or may have remained substantially unfermented ("green tea").

### Tea-based beverage

As used herein the term "tea-based beverage" refers to a beverage comprising at least 0.01% tea solids by weight of the beverage. Preferably the tea-based beverage comprises from 0.04 to 3% tea solids, more preferably from 0.06 to 2%, most preferably from 0.1 to 1%.

### THE PROCESS

A first aspect of the present invention provides a process for the manufacture of an infusible beverage ingredient. We have surprisingly found that an infusible beverage ingredient comprising dried fruit pieces which have a reduced tendency to aggregate and/or form agglomerates can be manufactured by the process of the present invention. In particular, the process comprises the steps of:
(a) providing fruit pieces and coating particles;
(b) mixing the fruit pieces and the coating particles to provide coated fruit pieces; and then
(c) drying the coated fruit pieces to a moisture content of less than 30 wt %, preferably to a moisture content of 0.1 to 10 wt %,
wherein the coating particles comprise particles of fruit peel which are less than 1.5 mm in diameter.

Without wishing to be bound by theory, it is thought that when the dried fruit pieces come into contact with water (e.g. when they are exposed to a humid environment), certain low molecular weight sugars and/or organic acids present therein become partly solubilised, thus forming an adherent layer on the surface of the fruit pieces. We have found that it is possible to reduce and/or prevent the aggregation of dried fruit pieces by coating the fruit pieces with a coating comprising particles of fruit peel of a specific size. Although the mechanism underpinning this effect is presently unknown, it is believed that the coating of fruit peel particles acts as a barrier, reducing the number of contact points between the surfaces of fruit pieces. In order to ensure that the particles of fruit peel are able to function in this manner, it has been found that they must be mixed with the fruit pieces before the fruit pieces are dried to a moisture content of less than 30 wt %. Moreover, it is thought that coating the fruit pieces prior to drying is likely to be an energy-efficient method of producing dried fruit that does not exhibit sticky behaviour. Therefore, steps (a) and (b) of the process should precede step (c).

The fruit pieces provided in step (a) of the process may be pieces of any food-grade fruit. For example, they may be fresh, canned (either in syrup or in juice) and/or frozen (e.g. individual quick frozen (IQF)). In a particularly preferred embodiment they are fresh fruit pieces and/or frozen fruit pieces.

Without wishing to be bound by theory, we believe that small fruit pieces having a relatively large surface area, particularly those with an irregular shape are especially prone to aggregation. Therefore, in certain embodiments the present invention is particularly directed towards a process for manufacturing small fruit pieces with improved handling and/or storage properties. Nevertheless, the fruit pieces should usually still be of a sufficient size such that they are noticeable to a consumer. Thus it is preferred that the fruit pieces provided in step (a) are no more that 20 mm in diameter, more preferably from 0.5 mm to 16 mm, still more preferably from 1 mm to 12 mm and most preferably from 1.5 mm to 10 mm.

The coating particles provided in step (a) of the process comprise particles of fruit peel. Preferably the coating particles consist essentially of particles of fruit peel, more preferably the coating particles consist of particles of fruit peel. The fruit peel particles will be less than 1.5 mm in diameter. Smaller sizes of particles are less visible on the surface of the fruit pieces, which means that the fruit pieces have a more natural appearance. Therefore, it is preferred that the particles of fruit peel are from 0.05 mm to 1 mm in diameter, more preferably from 0.1 mm to 0.75 mm in diameter. In any case, the particles of fruit peel will usually be of a smaller size than the fruit pieces they are being used to coat.

The particles of fruit peel may be particles of any food-grade fruit peel. From a standpoint of sustainability the fruit peel particles are preferably particles of citrus peel, since citrus peel is a byproduct left over after juice extraction. The citrus peel may be from any citrus fruit, with preferred citrus peels including clementine, grapefruit, lemon, lime, mandarin, orange, tangerine or a mixture thereof. Due to their light colour, lemon peel particles are less visible on the surface of the fruit pieces and such fruit pieces therefore have a natural appearance that is preferred by some consumers. Thus, in a particularly preferred embodiment, the fruit peel particles comprise lemon peel particles.

The coating particles provided in step (a) need not be dried, but in a preferred embodiment they are. Preferably they are dried to a moisture content of less than 30 wt %, more preferably to a moisture content of less than 20 wt %, more preferably to a moisture content of 0.1 to 10 wt %.

Infusible beverage ingredients are typically dried to a low moisture content. Such dried ingredients may be easier to handle than non-dried ingredients and/or preserved for longer periods of storage. Therefore, the process comprises the step of drying the fruit pieces to a moisture content of less than 30 wt %, preferably to a moisture content of less than 20 wt %, more preferably to a moisture content of 0.1 to 10 wt %. Any suitable drying method may be used, with preferred methods including freeze-drying, air-drying, vacuum drying and vacuum microwave drying.

Very high levels of coating particles may result in the fruit pieces having an unwanted flavour and/or undesirable appearance. Therefore, in one of the preferred embodiments the fruit pieces and plant coating particles provided in step (a) are in a weight ratio of 1:2 to 20:1, more preferably 1:1 to 10:1.

Once the fruit pieces have been dried, any excess fruit peel particles are optionally removed, preferably by sieving using a sieve with an appropriate mesh size (i.e. a mesh size selected such that fruit pieces will be retained by the sieve while any excess fruit peel particles will pass through the sieve).

In one preferred embodiment, the process comprises the additional step of:
(d) combining the dried coated fruit pieces with tea plant material and/or herb plant material to provide an infusible beverage product.

The infusible beverage product provided in this embodiment may optionally be packaged, preferably in a porous container. Non-limiting examples of suitable porous containers include infusion packets (such as tea bags), cartridges for beverage brewing machines, tea sticks and the like, with infusion packets being particularly preferred.

### THE INFUSIBLE BEVERAGE INGREDIENT

In second aspect, the present invention provides an infusible beverage ingredient comprising dried fruit pieces, wherein the fruit pieces comprise a coating, the coating comprising particles of fruit peel which are less than 1.5 mm in diameter.

As discussed above, we have found that small pieces of dried fruit are particularly prone to aggregation. Thus it is preferred that the infusible beverage ingredient comprises fruit pieces that are no more that 20 mm in diameter, more preferably from 0.5 mm to 16 mm, still more preferably from 1 mm to 12 mm and most preferably from 1.5 mm to 10 mm.

The coating comprises particles of fruit peel which are less than 1.5 mm in diameter. Smaller sizes of particles are less visible on the surface of the fruit pieces, resulting in fruit pieces that are more natural in appearance. Therefore, it is preferred that the particles of fruit peel are from 0.05 mm to 1 mm in diameter, more preferably from 0.1 mm to 0.75 mm in diameter.

The level of the coating material present may also affect the appearance of the dried fruit pieces. Additionally or alternatively, a high levels of coating may result in an undesirably hazy and/or cloudy beverage following infusion of the infusible beverage ingredient in an aqueous liquid such as water (e.g. brewing). Therefore, it is preferred that the coated fruit pieces comprise the fruit peel particles in an amount of 0.5 to 50 wt %, more preferably 1 to 30 wt% and most preferably 2 to 20 wt %.

In order to prolong its shelf life, the infusible beverage product preferably has a moisture content of less than 30 wt %, more preferably less than 20 wt % and most preferably from 0.1 to 10 wt %.

The fruit peel particles may be particles of any food-grade fruit peel. From a standpoint of sustainability the fruit peel particles are preferably particles of citrus peel, since citrus peel is a byproduct left over after juice extraction. The citrus peel may be from any citrus fruit, with preferred citrus peels including clementine, grapefruit, lemon, lime, mandarin, orange, tangerine or a mixture thereof. Due to their pale colour, lemon peel particles are less visible on the surface of the fruit pieces and such fruit pieces therefore have a natural appearance that is preferred by some consumers. Thus, in a particularly preferred embodiment, the fruit peel particles comprise particles of lemon peel.

The infusible beverage ingredient of the present invention may be manufactured by any suitable means. Preferably, it is manufactured using the process of the present invention.

In a third aspect, an infusible beverage product is provided comprising the infusible beverage ingredient of the second aspect of the invention. In a particularly preferred embodiment the infusible beverage product additionally comprises tea plant material and/or herb plant material.

### EXAMPLES

The present invention will now be illustrated by reference to the following non-limiting examples.

### Example 1

This example demonstrates the potential of certain coating materials to reduce the stickiness of fruit pieces.

### Coating material

The coating materials used in this set of experiments are summarised in Table 1. In all cases the particle size of the coating material was less than 0.75 mm. Some of the coating materials were pre-treated (i.e. freeze-dried, then milled and sieved) in order to obtain particles of these materials. Maltodextrin (C*Dry, DE 6.2) was obtained from Cargill.

**TABLE 1: Coating material particles**

| **Sample** | **Coating material** | **Pre-treatment** |
|---|---|---|
| A | Banana peel | Freeze-dried + milled + sieved |
| B | Grapefruit peel | Freeze-dried + milled + sieved |
| C | Lemon peel | Freeze-dried + milled + sieved |
| D | Melon peel | Freeze-dried + milled + sieved |
| E | Pomegranate peel | Freeze-dried + milled + sieved |
| F | Watermelon peel | Freeze-dried + milled + sieved |
| G | Mango Peel | Freeze-dried + milled + sieved |
| H | Maltodextrin | - |
| Control | None (control) | - |

### Sample preparation

Fresh pineapples were obtained from a local supermarket. The fresh pineapples were peeled and de-cored and the remaining flesh was cut into cubes approximately 1 cm³ in size. An excess of the particulate coating material was combined with 100 g of fresh pineapple pieces. The coated pineapple samples were air dried and excess coating material removed. The samples were stored for around 3 months at room temperature and humidity prior to the stickiness of the fruit pieces being assessed as described below.

### Protocol for assessing stickiness

One dried pieces of pineapple was compressed between two fingers (thumb and index finger) and suddenly released. The relative tendency of each sample to adhere was monitored, and a qualitative stickiness score was assigned to each sample. Non-sticky samples fell from the fingers as soon as they were released, while sticky samples adhered to the fingers before falling.

### Results

The results are summarised in Table 2. The control sample (i.e. uncoated dried pineapple pieces) was judged to be the stickiest sample. Pineapple pieces coated with particles of banana peel (sample A), grapefruit peel (sample B), lemon peel (sample C), melon peel (sample D) or pomegranate peel (sample E) were judged to be non-sticky. Pineapple pieces coated with particles of watermelon peel (sample F) or mango peel (sample G) were also found to be substantially less sticky than the control sample.

A known manner of avoiding stickiness in foods containing low molecular weight sugars and/or organic acids (and hence having a low glass transition temperature) is to use a food additive to increase their glass transition temperature (T_{g}). One such food additive is maltodextrin. Surprisingly, maltodextrin (sample H) was not particularly effective at reducing the stickiness of pineapple pieces.

**TABLE 2: Preliminary stickiness results**

| **Sample** | **Coating material** | **Stickiness** |
|---|---|---|
| A | Banana peel | - |
| B | Grapefruit peel | - |
| C | Lemon peel | - |
| D | Melon peel | - |
| E | Pomegranate peel | - |
| F | Watermelon peel | + |
| G | Mango Peel | ++ |
| H | Maltodextrin | +++ |
| Control | None | +++++ |

### Example 2

In order to assess the stickiness of coated fruit pieces in a more quantitative manner, a stickiness score was developed. In order to assign a stickiness score, a series of tests were performed.

### Coating material

Grapefruits (Ruby Red variety), oranges and lemons were obtained from a local supermarket. In all cases the peel (flavedo and albedo) was removed and cut into small pieces (approximately 10 mm x 10 mm). The fruit peels were then either air dried at 70°C in a drying cabinet or freeze-dried to constant weight. The dried fruit peel pieces were milled in a Moulinex kitchen machine, resulting in a free-flowing powder. This powder was sieved through a 500 µm sieve to give particulate coating material.

### Particle size

Particle size of fruit peel particles was measured using a Malvern Mastersize 2000 Particle Size Analyzer equipped with a Hydro S automated sample dispersion unit (Malvern Instruments Ltd). Briefly, citrus peel particle size was measured in water by adding citrus peel particles to the dispersion unit. Typically, the particle size distribution was measured for each batch of fruit peel particles.

### Fruit pieces

Fresh pineapples were obtained from a local supermarket. The fresh pineapples were peeled and de-cored. The remaining flesh was cut into cubes approximately 1 cm³ in size (i.e. 1 cm x 1 cm x 1 cm) using a Dynacube vegetable cutter (Dynamic SA). Surplus juice was removed, e.g. using a Moulinex kitchen machine equipped with a salad spinner device. The pineapple pieces were immediately used for coating experiments.

### Sample preparation

Particulate coating material was combined with 100 g of fresh pineapple pieces. The coated pineapple pieces were either air dried (AD) at 70°C in a drying cabinet or freeze-dried (FD) to constant weight. Following drying, excess coating material was removed if necessary. Unless otherwise indicated, the coated dried fruit pieces typically comprised ∼10 wt % of the coating material. The stickiness of the fruit pieces was assessed as described below.

### Equilibration at fixed water activities

Dried fruit pieces were equilibrated for at least 2 weeks at a fixed water activity (a_{w}) prior to performing the necessary tests to assign a stickiness score. Such equilibration was achieved by were apportioning the fruit pieces into Petri dishes followed by storage of the samples within a sealed container above a saturated aqueous salt solution. As illustrated in Table 3, the desired water activity was achieved by selecting an appropriate salt solution.

**TABLE 3: Water activity of saturated salt solutions**

| **Salt solution** | **Water activity (a_{w})** |
|---|---|
| Magnesium chloride | 0.35 |
| Magnesium nitrate | 0.52 |
| Sodium nitrite | 0.67 |

### Below Test

A blow test was adapted from the method described in Paterson *et al.* (Paterson A. H.J., Brooks G.F. & Bronlund J.E. (2001) "The blow test for measuring the stickiness of powders" Conference of Food Engineering 2001 pp. 408-414).

The blow test utilised compressed air to assess how easily fruit pieces flow. The air flow was channelled through an aperture 2 mm in diameter which was positioned 12 mm above the sample surface at an angle of 45°. A pressure gauge was used to monitor the pressure of the air flow through the aperture. The gauge pressure was manually read when the following three criteria were met:
(i) movement of fruit pieces on the surface of the sample observed;
(ii) movement of non-surface fruit pieces observed; and
(iii) fruit pieces displaced such that the bottom of the Petri dish became visible.

As illustrated in Table 4, a provisional stickiness score was allocated to a sample depending on the result of the blow test. The gauge used to measure the air pressure was zero referenced to atmospheric pressure (i.e. the gauge measures the pressure above atmospheric pressure). The maximum gauge pressure capable of being measured was 1 bar (i.e. 1 bar above atmospheric pressure). If any of the abovementioned criteria had not been met by the time this pressure was achieved, the gauge pressure necessary to achieve said criteria was judged to be > 1 bar.

**TABLE 4: Provisional stickiness scores**

| **Gauge pressure** | **Criterion (i)** | **Criterion (ii)** | **Criterion (iii)** |
|---|---|---|---|
| 0 to 0.33 bar | 1 | 1 | 1 |
| 0.33 to 0.66 bar | 2 | 2 | 1 |
| 0.66 to 1 bar | 3 | 2 | 2 |
| >1 bar | 3 | 3 | 2 |

The stickiness score from the blow test formed the minimum final stickiness score that could be allocated to the sample. For example, if a sample was assigned a provisional stickiness score of "2" based on this test, it could not subsequently be assigned a lower stickiness score of "1" based on further tests. Nevertheless, the sample could subsequently be assigned a higher stickiness score (e.g. a score of "3") based on further tests.

### Break-up test

Fruit pieces equilibrated to a specific water activity in a Petri dish were sometimes in the form of an agglomerated mass which, aside from a few pieces on the surface, could not be moved by the blow test. In order to measure the force required to break up such an agglomerated mass a Universal Materials Testing Instrument (Instron) was used. To perform the break-up test, the Instron Universal Materials Testing Instrument was set up with a 100 N load cell and three-point bend geometry. An agglomerated sample in a Petri dish was loaded by tipping the Petri dish such that the base of the Petri dish was in a vertical orientation. The test was operated in compression, with the force being measured during a test length of 10 mm and at speed of 50 mm/min. The sample was rotated to allow a maximum of three tests to be performed. The measured force is based on the plateau force and not the initial peak. Further scoring of stickiness can be made based on a combination of such force measurements, together with observations regarding the manner in which the mass breaks up (see Table 5).

**TABLE 5: Break-up test and stickiness score**

| **Observed behaviour in break-up test** | **Stickiness score** |
|---|---|
| Sample did not remain in Petri dish and could not be tested | 1 |
| Test caused sample to break apart and flow out of Petri dish or very low force measured (<0.3 N) | 2 |
| Sample remained in Petri dish and moderate force measured (0.3 to 1.2 N) | 3 |
| Sample remained in Petri dish and high force measured (>1.2 N) Agglomerated mass cracks during test | 4 |
| Sample remained in Petri dish and high force measured (>1.2 N) Agglomerated mass deforms plastically with no cracking | 5 |

### Sticky point temperature

A third test was performed in some instances in order to further refine the stickiness score assigned to a particular sample. This test involved the determination of sticky point temperature (Tₛ) (essentially the temperature at which a substance develops stickiness) using a vane rheometer. Tₛ was only determined for samples already assigned a stickiness score of 1 to 3 based on the blow test and the break-up test.

### Summary of stickiness scores

The final stickiness score assigned to a sample was based on one or more of the above tests. Table 6 summarises the typical sample characteristics associated with each score. Where a sample was found to fit between two stickiness score definitions (e.g. due to subtle differences which meant they could be classified by either score) they were assigned an intermediate stickiness score. For example, a sample with a stickiness score of "2.5" has been judged to have sample characteristics somewhere between those described for a stickiness score of "2" and a stickiness score of "3".

**TABLE 6: Summary of stickiness scores**

| **Stickiness score** | **Definition** | **Sample characteristics** | **Sticky point temperature** |
|---|---|---|---|
| 1 | Not sticky | Fruit pieces do not form agglomerates and flow easily | Not detectable |
| 2 | Not sticky | Fruit pieces form agglomerates which can be broken up easily. | >30°C |
| 3 | Moderately sticky | Fruit pieces form agglomerates which break up easily into small clumps under mechanical agitation. These small clumps are easily broken into individual pieces. | >30°C |
| 4 | Sticky | Fruit pieces form agglomerates which break up under mechanical agitation into large clumps. These large clumps can then be broken up into smaller clumps, but not individual pieces. | ≤25°C |
| 5 | Very sticky | Fruit pieces will form agglomerates which will deform under mechanical agitation ratherthan break apart into clumps. | Not determined |

### Trial 1

This trial investigated the effect of applying the coating material particles prior to drying the fruit pieces rather than applying said particles to fruit pieces which had previously been dried. Sipemat 22S (obtained from Evonik Degussa, Germany), a silica based anti-caking material, is included as a comparative example. Air-dried pineapple pieces without any coating particles are included as a control (sample T1-309). The results of trial 1 are summarised in Table 7, wherein the column entitled "Drying method" refers to the method used to dry the fruit pieces (AD = air-dried) and the column entitled "Size range" refers to the size range of the fruit pieces.

**TABLE 7: Results of trial 1**

| **Sample ID** | **Fruit pieces** | **Size range** | **Coating material** | **Drying method** | **Stickiness score** | | |
|---|---|---|---|---|---|---|---|
| | | | | | **a_{w} = 0.35** | **a_{w} = 0.53** | **a_{w} = 0.64** |
| T1-309 | Fresh pineapple | 5 to 7 mm | No coating | AD | 3 | 4 | 4 |
| T1-317 | Fresh pineapple | 5 to 7 mm | Lemon peel particles | AD | 1 | 2.5 | 2.5 |
| T1-319 | Fresh pineapple | 5 to 7 mm | Sipemat | AD | 3 | 4 | 4.5 |
| T1-329 | Dried pineapple | 5 to 7 mm | Lemon peel particles | AD | 3 | 4 | 4 |
| T1-330 | Dried pineapple | 5 to 7 mm | Sipemat | AD | 2.5 | 2.5 | 2.5 |

A coating material is considered to have had an effect on stickiness if it has a different stickiness score to the control (in this case sample T1-309) at a given water activity level. For example, sample T1-317 has a lower stickiness score than sample T1-309 for all of the water activity levels investigated, therefore the coating material (i.e. lemon peel particles coated on fresh pineapple pieces) is judged to be effective at reducing stickiness.

The results indicate that Sipemat is effective at preventing stickiness if it is applied to fruit pieces that have already been dried (sample T1-330). However, if Sipemat is applied to the fruit pieces prior to drying them, it is no longer effective (sample T1-319). In contrast, lemon peel particles have essentially no effect on stickiness if they are coated onto fruit pieces that have already been dried (sample T-329), whereas they are very effective if they are applied as a coating prior to drying the fruit pieces (sample T-317).

### Trial 2

This trial demonstrates that reduced stickiness is observed for a number of different types of fruit peel particles. Dried pineapple pieces without any coating particles are included as control samples (samples T2-043 and T2-050). The results of trial 2 are summarised in Table 8, wherein the column entitled "Drying method" refers to the method used to dry the fruit pieces (AD = air-dried, FD = freeze-dried) and the column entitled "Size range" refers to the size range of the fruit pieces.

"Fresh" lemon peel particles (samples T2-046 and T2-053) refers to particles of lemon peel that have not been subjected to a drying step. Such particles were obtained by using a grater to remove the peel from a lemon and then using a hand-held mixer equipped with a blade to obtain very small pieces of the grated lemon peel.

**TABLE 8: Results of trial 2**

| **Sample ID** | **Fruit pieces** | **Size range** | **Coating material** | **Drying method** | **Stickiness score** | | |
|---|---|---|---|---|---|---|---|
| | | | | | **a_{w} = 0.35** | **a_{w} = 0.53** | **a_{w} = 0.64** |
| T2-043 | Fresh pineapple | 5 to 7 mm | No coating | AD | 3 | 4 | 5 |
| T2-044 | Fresh pineapple | 5 to 7 mm | Lemon peel particles (FD) | AD | 2.5 | 3 | 3 |
| T2-045 | Fresh pineapple | 5 to 7 mm | Lemon peel particles (AD) | AD | 2.5 | 3 | 3 |
| T2-046 | Fresh pineapple | 5 to 7 mm | Lemon peel particles (fresh) | AD | 2 | 4 | 4 |
| T2-047 | Fresh pineapple | 5 to 7 mm | Orange peel particles (FD) | AD | 3 | 4 | 4 |
| T2-048 | Fresh pineapple | 5 to 7 mm | Grapefruit peel particles (FD) | AD | 3 | 3 | 4 |
| T2-050 | Fresh pineapple | 6 to 8 mm | No coating | FD | 3 | 4 | 4 |
| T2-051 | Fresh pineapple | 6 to 8 mm | Lemon peel particles (FD) | FD | 2 | 3 | 3 |
| T2-052 | Fresh pineapple | 6 to 8 mm | Lemon peel particles (AD) | FD | 2 | 3 | 3 |
| T2-053 | Fresh pineapple | 6 to 8 mm | Lemon peel particles (fresh) | FD | 2.5 | 3 | 4 |
| T2-054 | Fresh pineapple | 6 to 8 mm | Orange peel partides (FD) | FD | 2 | 2.5 | 3 |
| T2-055 | Fresh pineapple | 6 to 8 mm | Grapefruit peel particles (FD) | FD | 2 | 2.5 | 4 |

The results indicate that fruit peel particles are effective at preventing stickiness when the fruit peel particles are applied as a coating prior to drying the fruit pieces. This is true regardless of the drying method used to dry the coated fruit pieces.

### Example 3

This example demonstrates the potential of fruit peel particles to reduce the stickiness of strawberry pieces.

### Sample preparation

Lemon peel particles were prepared as described in Example 2. Fresh strawberries were obtained from a local supermarket Fresh strawberry pieces were obtained in essentially the same way as described for pineapple pieces (see Example 2), although the fresh strawberries were hulled before being cut into cubes rather than being peeled and de-cored. The strawberry pieces were immediately used for coating experiments.

Particulate coating material was combined with fresh strawberry pieces. The coated strawberry pieces were either air dried (AD) at 70°C in a drying cabinet or freeze-dried (FD) to constant weight. Following drying, the coated strawberry pieces comprised ∼20 wt % of the coating material.

### Protocol for assessing stickiness

Dried strawberry pieces were equilibrated for at least 2 weeks at a fixed water activity (a_{w}) prior to performing the necessary tests to assign a stickiness score. A stickiness score was assigned to each sample using the tests described in Example 2.

### Trial 3

This trial demonstrates that fruit peel particles reduce the stickiness of strawberry pieces. Dried strawberry pieces without any coating particles are included as control samples (samples T3-057 and T3-064). The results of trial 3 are summarised in Table 9, wherein the column entitled "Drying method" refers to the method used to dry the fruit pieces (AD = air-dried, FD = freeze-dried) and the column entitled "Size range" refers to the size range of the fruit pieces.

**TABLE 9: Results of trial 3**

| **Sample ID** | **Fruit pieces** | **Size range** | **Coating material** | **Drying method** | **Stickiness score** | | |
|---|---|---|---|---|---|---|---|
| | | | | | **a_{w} = 0.35** | **a_{w} = 0.53** | **a_{w} = 0.64** |
| T3-057 | Fresh strawberry | 5 to 7 mm | No coating | AD | 2 | 4 | 4 |
| T3-059 | Fresh strawberry | 5 to 7 mm | Lemon peel particles | AD | 2 | 2.5 | 2.5 |
| T3-064 | Fresh strawberry | 6 to 8 mm | No coating | FD | 2 | 2.5 | 3 |
| T3-066 | Fresh strawberry | 6 to 8 mm | Lemon peel particles | FD | 1 | 1.5 | 2 |

The results indicate that fruit peel particles can reduce the stickiness of strawberry pieces when said particles are applied as a coating prior to drying the fruit pieces. This is true regardless of the drying method used to dry the coated fruit pieces.

### Example 4

Fruit peel particles comprising different fractions of the fruit peel were investigated to determine their effect on the stickiness of fruit pieces. The influence of particle size was also considered.

### Coating material

Lemon peel particles (total peel) were either prepared as described in Example 2 (samples T4-120, T4-144 and T4-119), or commercially available (samples T4-128, T4-148 and T4-127 used lemon peel powder obtained from Martin Bauer, Germany).

Flavedo and albedo were separated from one another by firstly removing the flavedo from the lemon using a grater, and then subsequently removing the albedo from the carpel by hand. Flavedo or albedo particles were obtained in the same way as for particles of total peel (i.e. by drying, milling and sieving).

In addition, particles of juiced lemon were investigated. These particles were obtained by juicing a lemon and discarding the juice. Particles of the remaining lemon were obtained in the same way as for particles of total peel (i.e. by drying, milling and sieving).

The coating particles were split into fractions by particle sizes (i.e. 100-200 µm, 200-350 µm, 350-500 µm) by sequential sieving using several sieves of appropriate mesh size.

### Sample preparation

Fresh pineapple pieces were obtained as described in Example 2. Particulate coating material was combined with fresh pineapple pieces. The coated pineapple pieces were air dried (AD) at 70°C in a drying cabinet After the drying step, the coated pineapple pieces comprised ∼10 wt % of the coating material.

### Protocol for assessing stickiness

Dried pineapple pieces were equilibrated for at least 2 weeks at a fixed water activity (a_{w}) prior to performing the necessary tests to assign a stickiness score. A stickiness score was assigned to each sample using the tests described in Example 2.

### Trial 4

The results of trial 4 are summarised in Table 10, wherein the column entitled "Drying method" refers to the method used to dry the fruit pieces (AD = air-dried), the column entitled "Size range" refers to the size range of the fruit pieces and the column entitled "Particle size" refers to the size range of the particles of coating material. Dried pineapple pieces without any coating particles are included as control sample (sample T4-143).

**TABLE 10: Results of trial 4**

| **Sample ID** | **Fruit pieces** | **Size range** | **Coating material** | **Particle size** | **Drying method** | **Stickiness score** | | |
|---|---|---|---|---|---|---|---|---|
| | | | | | | **a_{w}=0.35** | **a_{w} = 0.53** | **a_{w} = 0.64** |
| T4-143 | Fresh pineapple | 6 to 8 mm | No coating | - | AD | 2 | 3 | 3.5 |
| T4-120 | Fresh pineapple | 6 to 8 mm | Total peel | 100 to 200 µm | AD | 2.5 | 2.5 | 2.5 |
| T4-144 | Fresh pineapple | 6 to 8 mm | Total peel | 200 to 350 µm | AD | 2 | 2.5 | 2.5 |
| T4-119 | Fresh pineapple | 6 to 8 mm | Total peel | 350 to 500 µm | AD | 2.5 | 2.5 | 2.5 |
| T4-122 | Fresh pineapple | 6 to 8 mm | Flavedo | 100 to 200 µm | AD | 2 | 2.5 | 2.5 |
| T4-145 | Fresh pineapple | 6 to 8 mm | Flavedo | 200 to 350 µm | AD | 2 | 2.5 | 2.5 |
| T4-121 | Fresh pineapple | 6 to 8 mm | Flavedo | 350 to 500 µm | AD | 2.5 | 2.5 | 3 |
| T4-124 | Fresh pineapple | 6 to 8 mm | Albedo | 100 to 200 µm | AD | 2 | 2.5 | 2.5 |
| T4-146 | Fresh pineapple | 6 to 8 mm | Albedo | 200 to 350 µm | AD | 2 | 2.5 | 2.5 |
| T4-123 | Fresh pineapple | 6 to 8 mm | Albedo | 350 to 500 µm | AD | 2 | 2.5 | 2.5 |
| T4-126 | Fresh pineapple | 6 to 8 mm | Juiced lemon | 100 to 200 µm | AD | 2 | 2.5 | 2.5 |
| T4-147 | Fresh pineapple | 6 to 8 mm | Juiced lemon | 200 to 350 µm | AD | 2 | 2.5 | 2.5 |
| T4-125 | Fresh pineapple | 6 to 8 mm | Juiced lemon | 350 to 500 µm | AD | 2 | 2.5 | 2.5 |
| T4-128 | Fresh pineapple | 6 to 8 mm | Total peel | 100 to 200 µm | AD | 2 | 2.5 | 2.5 |
| T4-148 | Fresh pineapple | 6 to 8 mm | Total peel | 200 to 350 µm | AD | 2 | 2.5 | 2.5 |
| T4-127 | Fresh pineapple | 6 to 8 mm | Total peel | 350 to 500 µm | AD | 2 | 2.5 | 3 |

This trial demonstrates that lemon peel particles reduce the stickiness of pineapple pieces irrespective of their particle size. Similarity, all of the peel fractions investigated were found to be effective at reducing stickiness.

## Claims

1. A process for the manufacture of an infusible beverage ingredient comprising dried fruit pieces, the process comprising the steps of:
(a) providing fruit pieces and coating particles;
(b) mixing the fruit pieces and the coating particles to provide coated fruit pieces; and then
(c) drying the coated fruit pieces to a moisture content of less than 30 wt %, preferably to a moisture content of 0.1 to 10 wt %,
wherein the coating particles comprise particles of fruit peel which are less than 1.5 mm in diameter.

2. A process as claimed in claim 1 wherein the particles of fruit peel comprise particles of citrus fruit peel, preferably particles of lemon peel.

3. A process as claimed in claim 1 or claim 2 wherein the coating particles provided in step (a) have a moisture content of less than 30 wt %.

4. A process as claimed in any one of the preceding claims wherein the fruit pieces provided in step (a) are no more than 20 mm in diameter, preferably 0.5 mm to 16 mm, more preferably 1 mm to 12 mm.

5. A process as claimed in any one of the preceding claims wherein the fruit pieces provided in step (a) are fresh fruit pieces and/or frozen fruit pieces.

6. An infusible beverage ingredient comprising dried fruit pieces, wherein the fruit pieces comprise a coating, the coating comprising particles of fruit peel which are less than 1.5 mm in diameter.

7. An infusible beverage ingredient as claimed in claim 6 wherein the particles of fruit peel are 0.05 mm to 1 mm in diameter, preferably 0.1 mm to 0.75 mm in diameter.

8. An infusible beverage ingredient as claimed in claim 6 or claim 7 wherein the particles of fruit peel comprise particles of citrus fruit peel, preferably particles of lemon peel.

9. An infusible beverage ingredient as claimed in any one of claims 6 to 8 wherein the coated fruit pieces comprise the particles of fruit peel in an amount of 0.5 to 50 wt %, preferably 1 to 30 wt %.

10. An infusible beverage ingredient as claimed in any one of claims 6 to 9 wherein the fruit pieces are no more than 20 mm in diameter, preferably 0.5 mm to 16 mm, more preferably 1 mm to 12 mm.

11. An infusible beverage ingredient as claimed in any one of claims 6 to 104 wherein the infusible beverage ingredient has a moisture content of less than 30 wt %, preferably 0.1 to 10 wt %.

12. An infusible beverage product comprising the infusible beverage ingredient as claimed in any one of claims 6 to 11.

13. An infusible beverage product as claimed in claim 12 wherein the infusible beverage product comprises tea plant material and/or herb plant material.

14. Use of coating particles to prevent the aggregation of dried fruit pieces, wherein the coating particles comprise particles of fruit peel which are less than 1.5 mm in diameter.

15. A use as claimed in claim 14 wherein the coating particles comprise particles of citrus fruit peel, preferably particles of lemon peel.

## Patentansprüche

1. Verfahren zum Herstellen eines Bestandteils eines Getränks zum Aufbrühen, der getrocknete Fruchtstücke aufweist,
wobei das Verfahren die folgenden Schritte aufweist:
(a) Bereitstellen von Fruchtstücken und überziehenden Teilchen;
(b) Mischen der Fruchtstücke und der überziehenden Teilchen, um überzogene Fruchtstücke bereitzustellen; und anschließend
(c) Trocknen der überzogenen Fruchtstücke bis zu einem Feuchtigkeitsgehalt von weniger als 30 Gew.-%, vorzugsweise bis zu einem Feuchtigkeitsgehalt von 0,1 bis 10 Gew.-%;
wobei die überziehenden Teilchen Teilchen von Fruchtschalen aufweisen, deren Durchmesser weniger als 1,5 mm beträgt.

2. Verfahren nach Anspruch 1,
wobei die Teilchen von Fruchtschalen Teilchen von Citrusfruchtschalen, vorzugsweise Teilchen von Zitronenschalen, aufweisen.

3. Verfahren nach Anspruch 1 oder 2,
wobei die im Schritt (a) bereitgestellten überziehenden Teilchen einen Feuchtigkeitsgehalt von weniger als 30 Gew.-% haben.

4. Verfahren nach einem der vorstehenden Ansprüche,
wobei die im Schritt (a) bereitgestellten Fruchtstücke einen Durchmesser von nicht mehr als 20 mm, vorzugsweise von 0,5 bis 16 mm, stärker bevorzugt von 1 bis 12 mm haben.

5. Verfahren nach einem der vorstehenden Ansprüche,
wobei die im Schritt (a) bereitgestellten Fruchtstücke Stücke von frischen Früchten und/oder gefrorene Fruchtstücke sind.

6. Bestandteil eines Getränks zum Aufbrühen, der getrocknete Fruchtstücke aufweist,
wobei die Fruchtstücke einen Überzug aufweisen, wobei der Überzug Teilchen von Fruchtschalen aufweist, deren Durchmesser weniger als 1,5 mm beträgt.

7. Bestandteil eines Getränks zum Aufbrühen nach Anspruch 6,
wobei die Teilchen von Fruchtschalen einen Durchmesser von 0,05 bis 1 mm, vorzugsweise einen Durchmesser von 0,1 bis 0,75 mm haben.

8. Bestandteil eines Getränks zum Aufbrühen nach Anspruch 6 oder 7,
wobei die Teilchen von Fruchtschalen Teilchen von Citrusfruchtschalen, vorzugsweise Teilchen von Zitronenschalen aufweisen.

9. Bestandteil eines Getränks zum Aufbrühen nach einem der Ansprüche 6 bis 8,
wobei die überzogenen Fruchtstücke die Teilchen von Fruchtschalen in einer Menge von 0,5 bis 50 Gew.-%, vorzugsweise von 1 bis 30 Gew.-% aufweisen.

10. Bestandteil eines Getränks zum Aufbrühen nach einem der Ansprüche 6 bis 9,
wobei die Fruchtstücke einen Durchmesser von nicht mehr als 20 mm, vorzugsweise von 0,5 bis 16 mm, stärker bevorzugt von 1 bis 12 mm haben.

11. Bestandteil eines Getränks zum Aufbrühen nach einem der Ansprüche 6 bis 10,
wobei der Bestandteil des Getränks zum Aufbrühen einen Feuchtigkeitsgehalt von weniger als 30 Gew.-%, vorzugsweise von 0,1 bis 10 Gew.-% hat.

12. Getränkeprodukt zum Aufbrühen,
das den Bestandteil eines Getränks zum Aufbrühen nach einem der Ansprüche 6 bis 11 aufweist.

13. Getränkeprodukt zum Aufbrühen nach Anspruch 12,
wobei das Getränkeprodukt zum Aufbrühen Teepflanzenmaterial und/oder Kräuterpflanzenmaterial aufweist.

14. Verwendung von überziehenden Teilchen, um die Aggregation von getrockneten Fruchtstücken zu verhindern,
wobei die überziehenden Teilchen Teilchen von Fruchtschalen aufweisen, deren Durchmesser weniger als 1,5 mm beträgt.

15. Verwendung nach Anspruch 14,
wobei die überziehenden Teilchen Teilchen von Citrusfruchtschalen, vorzugsweise Teilchen von Zitronenschalen aufweisen.

## Revendications

1. Procédé pour la fabrication d'un ingrédient de boisson infusible comprenant des morceaux de fruits séchés, le procédé comprenant les étapes consistant :
(a) à fournir des morceaux de fruits et des particules d'enrobage ;
(b) à mélanger les morceaux de fruits et les particules d'enrobage pour fournir des morceaux de fruits enrobés ; et ensuite
(c) à sécher les morceaux de fruits enrobés jusqu'à une teneur en humidité inférieure à 30 % en poids, de préférence jusqu'à une teneur en humidité de 0,1 à 10 % en poids,
dans lequel les particules d'enrobage comprennent des particules de peau de fruits qui sont inférieures à 1,5 mm de diamètre.

2. Procédé selon la revendication 1, dans lequel les particules de peau de fruits comprennent des particules de peau de fruits d'agrumes, de préférence des particules de peau de citron.

3. Procédé selon la revendication 1 ou la revendication 2, dans lequel les particules d'enrobage fournies dans l'étape (a) présentent une teneur en humidité inférieure à 30 % en poids.

4. Procédé selon l'une quelconque des revendications précédentes, dans lequel les morceaux de fruits fournis dans l'étape (a) ne sont pas supérieurs à 20 mm de diamètre, de préférence de 0,5 mm à 16 mm, encore mieux de 1 mm à 12 mm.

5. Procédé selon l'une quelconque des revendications précédentes, dans lequel les morceaux de fruits fournis dans l'étape (a) sont des morceaux de fruits frais et/ou des morceaux de fruits congelés.

6. Ingrédient de boisson infusible comprenant des morceaux de fruits séchés, dans lequel les morceaux de fruits comprennent un enrobage, l'enrobage comprenant des particules de peau de fruits qui sont inférieures à 1,5 mm de diamètre.

7. Ingrédient de boisson infusible selon la revendication 6, dans lequel les particules de peau de fruits sont de 0,05 mm à 1 mm de diamètre, de préférence de 0,1 mm à 0,75 mm de diamètre.

8. Ingrédient de boisson infusible selon la revendication 6 ou la revendication 7, dans lequel les particules de peau de fruits comprennent des particules de peau de fruits d'agrumes, de préférence des particules de peau de citron.

9. Ingrédient de boisson infusible selon l'une quelconque des revendications 6 à 8, dans lequel les morceaux de fruits enrobés comprennent les particules de peau de fruits dans une quantité de 0,5 à 50 % en poids, de préférence de 1 à 30 % en poids.

10. Ingrédient de boisson infusible selon l'une quelconque des revendications 6 à 9, dans lequel les morceaux de fruits ne sont pas supérieurs à 20 mm de diamètre, de préférence de 0,5 mm à 16 mm, encore mieux de 1 mm à 12 mm.

11. Ingrédient de boisson infusible selon l'une quelconque des revendications 6 à 10, dans lequel l'ingrédient de boisson infusible présente une teneur en humidité inférieure à 30 % en poids, de préférence de 0,1 à 10 % en poids.

12. Produit de boisson infusible comprenant l'ingrédient de boisson infusible selon l'une quelconque des revendications 6 à 11.

13. Produit de boisson infusible selon la revendication 12, dans lequel le produit de boisson infusible comprend un matériau de plante de thé et/ou un matériau de plante d'herbe.

14. Utilisation de particules d'enrobage pour éviter l'agrégation de morceaux de fruits séchés, dans laquelle les particules d'enrobage comprennent des particules de peau de fruits qui sont inférieures à 1,5 mm de diamètre.

15. Utilisation selon la revendication 14, dans laquelle les particules d'enrobage comprennent des particules de peau de fruits d'agrumes, de préférence des particules de peau de citron.
